# EUROPÄISCHE PATENTSCHRIFT

(11) **EP 3 419 779 B1**
(45) Veröffentlichungstag und Bekanntmachung des Hinweises auf die Patenterteilung: **30.09.2020**
(21) Anmeldenummer: 17716437.3
(22) Anmeldetag: 21.02.2017
(51) Int. Cl.: B23B 5/12

(54) **SCHÄLPLATTE**
PEELING PLATE
PLAQUE D'ÉPLUCHAGE

(30) Priorität: 26.02.2016 AT 4016 U
(43) Veröffentlichungstag der Anmeldung: 02.01.2019
(73) Patentinhaber: Ceratizit Austria Gesellschaft m.b.H., 6600 Reutte (AT)
(72) Erfinder: HUBER, Ronald, 6600 Reutte (AT); URSCHITZ, Harald, 6600 Reutte (AT)
(74) Vertreter: Ciesla, Dirk
(86) Internationale Anmeldenummer: PCT/AT2017/000008
(87) Internationale Veröffentlichungsnummer: WO 2017/143368

(56) Entgegenhaltungen:
- EP-A1- 2 732 891
- DE-A1- 19 703 569
- DE-U1- 20 014 428
- DE-U1- 29 815 761
- US-A1- 2013 129 430

## Beschreibung

Die Erfindung betrifft eine Schälplatte mit den Merkmalen des Oberbegriffs von Anspruch 1 sowie eine Anordnung aus einem Werkzeughalter und zumindest einer Schälplatte.

Drehschälen (engl. *bar peeling*) ist ein spanabhebendes Bearbeitungsverfahren zum Abtragen äußerer Materialschichten von gewalzten oder geschmiedeten Rohlingen mit rundem Querschnitt. Beim Drehschälen wird das Werkstück - in der Regel eine Stange oder ein dickwandiges Rohr - von Walzen zentriert durch ein rotierendes Werkzeug, den Schälkopf, geführt.

Der Schälkopf weist mindestens drei, in der Regel vier bis acht Werkzeughalter oder -schlitten mit jeweils ein bis drei Schneideinsätzen auf. Die Werkzeughalter oder -schlitten können mit oder ohne sogenannte Kassetten ausgebildet sein. Die beim Drehschälen verwendeten Schneideinsätze werden als Schälplatten bezeichnet.

Die Schälplatten werden beim Drehschälen üblicherweise so angeordnet, dass eintragsseitig sogenannte Schruppplatten (auch als Vorschneider bezeichnet) den groben Materialabtrag, das Schruppen, übernehmen und austragsseitig sogenannte Schlichtplatten (auch als Fertigschneider oder Nachschneider bezeichnet) für hohe Oberflächengüte, Formgenauigkeit und Maßgenauigkeit sorgen. Die Schlichtplatten sind in Bezug auf die Vorschubrichtung nach den Schruppplatten angeordnet.

In der Regel sind in einem Werkzeughalter also gesonderte Schälplatten vorgesehen, welche diese Aufgaben getrennt übernehmen. Für manche Anwendungen - etwa wenn keine besonderen Anforderungen an die Oberflächengüte gestellt werden - kann auf Schlichtplatten verzichtet werden.

Häufig werden für das Schruppen runde Schälplatten, also Schneideinsätze mit einer in der Draufsicht kreisförmigen Gestalt, eingesetzt. Nachteilig an runden Schälplatten ist die Anfälligkeit für ein Verdrehen der Schälplatten im Plattensitz und ein Lockern der Spannschraube, was zum Verlust der Schälplatte sowie gegebenenfalls einer Unterlagsplatte während des Einsatzes führen kann.

Dieser Verlust führt zu einem Totalausfall des Werkzeughalters, was mit sehr hohen Kosten verbunden ist. Weiters ungünstig an runden Schälplatten ist die resultierende wellige Oberfläche am Werkstück.

Darüber hinaus sind Schälplatten bekannt, die sowohl Hauptschneiden als auch Nebenschneiden aufweisen. Die Hauptschneide übernimmt dabei den groben Materialabtrag, das Schruppen; die Nebenschneide führt das Schlichten aus, sorgt also für hohe Oberflächengüte, Formgenauigkeit und Maßgenauigkeit. So ist zum Beispiel aus der AT 501655 A1 eine polygonale Schälplatte mit einer Hauptschneide und einer dazu in einem flachen Winkel angeordneten Nebenschneide bekannt. Die aktiven Haupt- und Nebenschneiden liegen dabei jeweils auf einer Seitenfläche der polygonalen Schälplatte. Eine maximal erreichbare Spantiefe ist bei diesen Platten sehr gering.

Die US2013129430 zeigt eine fünfeckige Wendeschneidplatte zum Fräsen.

Die DE29815761U zeigt eine Wendeschneidplatte zum Rohrschälen, mit einem in Draufsicht angenähert quadratischen Grundkörper mit jeweils an einer Seitenkante des Quadrates liegender Haupt- und Nebenschneide.

Aufgabe der vorliegenden Erfindung ist es, eine verbesserte Schälplatte anzugeben. Insbesondere soll die verbesserte Schälplatte eine große maximale Spantiefe erlauben und zugleich eine hohe Oberflächengüte schaffen.

Die Aufgaben werden gelöst durch eine Schälplatte mit den Merkmalen von Anspruch 1 sowie eine Anordnung gemäß Anspruch 18. Vorteilhafte Ausführungsformen sind in den abhängigen Ansprüchen angegeben.

Eine erfindungsgemäße Schälplatte weist auf:
- eine Oberseite und eine Unterseite,
- sich zwischen der Oberseite und der Unterseite erstreckende Seitenflächen,
- am Übergang der Seitenflächen zur Oberseite ausgebildete Hauptschneiden und Nebenschneiden,
wobei die Schälplatte in einer Draufsicht auf die Oberseite die Gestalt eines im Wesentlichen regelmäßigen n-Ecks, mit n ist fünf oder sechs, und n zwischen den n Seitenflächen liegende Seitenkanten aufweist, wobei am Übergang wenigstens einer Seitenfläche zur Oberfläche eine Hauptschneide und eine Nebenschneide ausgebildet ist, wobei aktive Hauptschneiden und aktive Nebenschneiden von einer Seitenkante beabstandet sind, welche Seitenkante am Übergang zur Oberseite eine aktive Schneidecke zur jeweiligen aktiven Hauptschneide und aktiven Nebenschneide bildet, wobei an wenigstens einer Seitenfläche wenigstens eine erste Teilfläche ausgebildet ist, welche mit der Oberseite eine Nebenschneide bildet, und an der wenigstens einen Seitenfläche wenigstens eine weitere Teilfläche ausgebildet ist, welche mit der Oberseite zumindest einen Teil einer Hauptschneide bildet und wobei die erste Teilfläche mit der weiteren Teilfläche einen Außenwinkel von größer 180° und kleiner 220° einschließt, und wobei an wenigstens einer Seitenfläche eine gegenüber der weiteren Teilfläche in einem Winkel verkippte dritte Teilfläche ausgebildet ist, wobei die weitere Teilfläche und die dritte Teilfläche mit der Oberseite die Hauptschneide bilden.
Es handelt sich also um eine Schälplatte mit fünfeckiger oder sechseckiger Grundgestalt.
Bevorzugt ist die sechseckige Grundgestalt.

"Aktive" Hauptschneide bzw. "aktive" Nebenschneide bedeutet, dass diese Haupt- bzw. Nebenschneiden für gleichzeitigen Einsatz bestimmt sind, d.h. dass sie bei Verwendung des Schneideinsatzes gleichzeitig zur Materialbearbeitung genutzt werden.
Die aktive Hauptschneide übernimmt dabei den groben Materialabtrag, das Schruppen, während die aktive Nebenschneide die Oberfläche des bearbeiteten Werkstückes glättet und so für hohe Oberflächengüte, Formgenauigkeit und Maßgenauigkeit sorgt.

Die gleichzeitig zur Materialbearbeitung verwendete aktive Hauptschneide und die aktive Nebenschneide sind nicht an der gleichen Seitenfläche ausgebildet, sondern befinden sich auf zwei benachbarten Seitenflächen und sind von einer Schneidecke beabstandet. Die zwischen einer aktiven Hauptschneide und einer aktiven Nebenschneide liegende Schneidecke wird als aktive Schneidecke bezeichnet.

Im Einsatz wird die Schälplatte gegenüber einem zu zerspanenden Werkstück, etwa einem Rundstab, so angestellt, dass der Flugkreis der aktiven Nebenschneide im Wesentlichen parallel zu einer Längsachse des Werkstücks verläuft. Der Flugkreis der Nebenschneide stellt also im Wesentlichen einen zur Längsachse des Werkstücks konzentrischen Zylindermantel dar. Der Flugkreis der Hauptschneide ist im Wesentlichen kegelstumpfförmig.
Die aktive Hauptschneide liegt bei einer Draufsicht auf die Schälplatte im Uhrzeigersinn und eintragsseitig vor der aktiven Nebenschneide. Die Anordnung könnte für rechtsläufige Anwendungen auch spiegelverkehrt erfolgen.
Die Spantiefe wird so gewählt, dass die aktive Hauptschneide nur so weit in das zu zerspanende Material eintaucht, dass die auf der Seitenfläche der aktiven

Hauptschneide an diese aktive Hauptschneide anschließende passive Nebenschneide nicht im Eingriff mit dem Material ist. Dies ist von Bedeutung, um die passive Nebenschneide nicht zu beschädigen. Denn diese passive Nebenschneide wirkt ja bei einer anderen Indexierung als aktive Nebenschneide. Genauer gesagt, wird diese passive Nebenschneide bei der sich durch Drehung der Schälplatte um 60° gegen den Uhrzeigersinn für eine sechseckige Platte, bzw. um 72° für eine fünfeckige Platte, sich einstellenden Indexierung zur aktiven Nebenschneide dieser neuen Indexierposition.
Aus dieser Maßgabe ergibt sich die maximale Spantiefe der Schälplatte.

Bevorzugt ist vorgesehen, dass am Übergang einer jeden Seitenfläche zur Oberfläche jeweils eine Hauptschneide und eine Nebenschneide ausgebildet ist. Der Schneideinsatz weist also bevorzugt fünf (für eine fünfeckige Platte) bzw. sechs (für eine sechseckige Platte) Paare an Hauptschneiden und Nebenschneiden entlang der Oberseite auf.
Der Schneideinsatz ist dann bezüglich der Oberseite fünf- bzw. sechsfach indexierbar. Bei einer fünfeckigen Grundform der Schälplatte ergibt sich alle 72° eine neue Indexier-Position, bei sechseckiger Grundform alle 60°.

Bevorzugt ist vorgesehen, dass die Nebenschneiden eine Länge von 1/6 bis 1/2 der Länge der Hauptschneiden aufweisen.
Damit wird erreicht, dass von der Nebenschneide nur ein geringer Anteil der verfügbaren Schneidkantenlänge am Übergang einer Seitenfläche zur Oberseite verbraucht wird.
Somit steht eine dementsprechend längere Hauptschneide und daraus resultierend eine größere maximale Spantiefe für das Schruppen zur Verfügung. Bei aus dem Stand der Technik bekannten Schälplatten ist hingegen die Hauptschneide wesentlich kürzer als die Nebenschneide ausgebildet. Diese Umkehr der aus dem Stand der Technik zu Schälplatten bekannten Verhältnisse erlaubt es mit erfindungsgemäßen Schälplatten bei der Bearbeitung eines Werkstückes eine große maximale Spantiefe bei zugleich hoher Oberflächengüte zu schaffen.

Bevorzugt ist vorgesehen, dass die Hauptschneiden und / oder die Nebenschneiden als Geradenabschnitte ausgebildet sind. Alternativ kann insbesondere die Nebenschneide konvex gekrümmt ausgeführt sein. Gegenüber den aus dem Stand der Technik bekannten Schruppplatten oder Vorschneidern mit Rundschneiden, welche ein Wellenprofil auf der Werkstückoberfläche erzeugen, resultiert aus dem von der Hauptschneide getragenen Schrupp-Prozess dank der vorliegenden Schälplatte bereits eine gleichmäßige Oberfläche ohne Wellenprofil. Dies führt zu homogeneren Einsatzbedingungen für die bezüglich der Vorschubrichtung der Hauptschneide nachfolgenden Nebenschneide bzw. für eine allenfalls nachfolgenden Schlichtplatte.

Es ist vorgesehen, dass an wenigstens einer Seitenfläche wenigstens eine erste Teilfläche ausgebildet ist, welche mit der Oberseite eine Nebenschneide bildet, und dass an der wenigstens einen Seitenfläche wenigstens eine weitere Teilfläche ausgebildet ist, welche mit der Oberseite zumindest einen Teil einer Hauptschneide bildet und wobei die erste Teilfläche mit der weiteren Teilfläche einen Außenwinkel von größer 180° und kleiner 210°, vorzugsweise einen Winkel von 190° einschließt. Für fünfeckige Schälplatten beträgt der maximale Außenwinkel der Teilflächen (Facetten) 216°.
Die erste Teilfläche bildet die Freifläche der Nebenschneide, die weitere Teilfläche bildet zumindest einen Teil der Freifläche der Hauptschneide.
Durch die Verkippung der Teilflächen zueinander ist sichergestellt, dass beim Einsatz der Nebenschneide (d.h. Nebenschneide aktiv) die an der gleichen Seitenfläche an die aktive Nebenschneide anschließende passive Hauptschneide nicht in das Material eingreift. Ein Außenwinkel von 190° entspricht einem Freiwinkel zwischen den Teilflächen von 10°.
Die Teilflächen bilden gewissermaßen Facetten einer Seitenfläche. Die Teilflächen sind durch Teilflächenübergänge voneinander begrenzt, wobei die Teilflächenübergänge parallel zur Symmetrieachse der Schälplatte verlaufen und bevorzugt nicht scharfkantig sind, sondern einen Radius von beispielsweise 5 mm aufweisen.

Bevorzugt ist vorgesehen, dass für eine sechseckige Grundform jene mit der Oberseite zumindest einen Teil einer Hauptschneide bildenden Teilflächen und welche von einer Seitenkante voneinander beabstandet sind, jeweils in einem Innenwinkel von 60° zueinander angeordnet sind. Für eine fünfeckige Grundform beträgt dieser Innenwinkel 72°.

Dies bedeutet, dass durch eine Drehung der Schälplatte um 60° bzw. 72° eine neue Indexierung erzielt wird.

In einer bevorzugten Ausführungsform ist die Schälplatte doppelseitig ausgeführt. Doppelseitig bedeutet, dass sowohl am Übergang von Seitenflächen zur Oberseite als auch am Übergang von Seitenflächen zur Unterseite Schneiden ausgebildet sind. Durch Wenden der Schälplatte werden die am Übergang der Seitenflächen zur Oberseite ausgebildeten Haupt- und Nebenschneiden nutzbar.
Wenden heißt im Zusammenhang mit dieser Offenbarung eine Rotation der Schälplatte um 180° bezüglich einer zur Symmetrieachse senkrechten Drehachse.

Bevorzugt ist vorgesehen, dass am Übergang wenigstens einer Seitenfläche zur Unterseite eine der Unterseite zuordenbare Hauptschneide und eine der Unterseite zuordenbare Nebenschneide ausgebildet ist.
Bevorzugt weist die Schälplatte bei sechseckiger Grundform sechs der Unterseite zuordenbare Hauptschneiden und sechs der Unterseite zuordenbare Nebenschneiden auf. Bei fünfeckiger Grundform sind es jeweils fünf Schneiden. Sind bei sechseckiger Grundform auch am Übergang einer jeden Seitenfläche zur Oberseite jeweils eine Hauptschneide und eine Nebenschneide ausgebildet, so erhält man eine 12-fach indexierbare Schälplatte. Es können dann also 12 voneinander unabhängige Paare an Haupt- und Nebenschneiden zur Bearbeitung eingesetzt werden. Fünfeckige Schälplatten sind entsprechend 10-fach indexierbar.

Bevorzugt ist vorgesehen, dass eine der Unterseite zuordenbare Hauptschneide am Übergang der ersten und der weiteren Teilfläche mit der

Unterseite und eine der Unterseite zuordenbare Nebenschneide am Übergang einer dritten Teilfläche mit der Unterseite ausgebildet ist.

In anderen Worten weist die Schälplatte bevorzugt jeweils drei Teilflächen an den Seitenflächen auf.

Dies ist dadurch erklärlich, da durch Wenden der Schälplatte Abschnitte der Teilflächen, welche in der ungewendeten Lage der Schälplatte Freiflächen zu der Oberseite zugeordneten Hauptschneiden bilden, im gewendeten Zustand als Freiflächen zu der Unterseite zugeordneten Nebenschneiden wirken.

Bevorzugt ist vorgesehen, dass an der Oberseite und / oder der Unterseite wenigstens im Bereich der Hauptschneiden und / oder der Nebenschneiden eine Spanleitstufe ausgebildet ist.

Bevorzugt ist vorgesehen, dass der Übergang der Teilflächen an einer Seitenfläche gerundet mit einem Krümmungsradius zwischen 1 und 20 mm, vorzugsweise mit einem Krümmungsradius von 5 mm ausgebildet ist.

Schutz wird auch begehrt für eine Anordnung wenigstens einer Schälplatte mit einem Werkzeughalter eines Schälwerkzeugs. Die Positionierung der Schälplatte an dem Werkzeughalter erfolgt bevorzugt so, dass die aktive Nebenschneide im Wesentlichen parallel zur Werkstückoberfläche angestellt ist.

Die Erfindung wird im Folgenden anhand der Figuren näher erläutert. Dabei zeigt:
- Fig. 1: eine Schälplatte nach Stand der Technik
- Fig. 2: eine Schälplatte der Erfindung in einer perspektivischen Ansicht
- Fig. 3: eine Schälplatte der Erfindung im Grundriss
- Fig. 4-5: eine Schälplatte der Erfindung im Querschnitt
- Fig. 6: eine Schälplatte der Erfindung im Eingriff mit einem Werkstück
- Fig. 7: eine Schälplatte in einem weiteren Ausführungsbeispiel

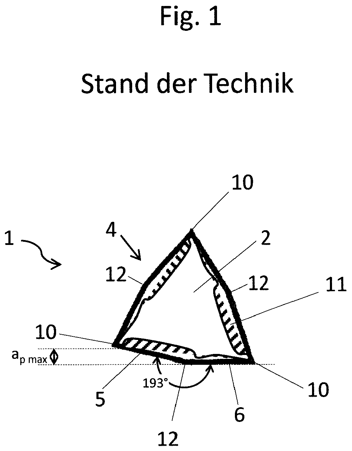

Figur 1 zeigt eine Schälplatte 1 nach Stand der Technik in einer Draufsicht auf eine Oberseite 2.
Die Schälplatte 1 weist in der Draufsicht auf die Oberseite 2 eine Grundform eines gleichseitigen Dreiecks mit drei Seitenkanten 10 (hier projizierend) auf. Am Übergang der Seitenflächen 4 zur Oberseite 2 sind Hauptschneiden 5 und Nebenschneiden 6 ausgebildet. Im Einsatz sind jeweils die einer Seitenfläche 4 zugeordneten Hauptschneiden 5 und Nebenschneiden 6 aktiv. Hauptschneiden 5 und Nebenschneiden 6 einer Seitenfläche 4 schließen eine Schneidecke 12 ein.
An der Oberseite 2 sind Spanleitstufen 11 ausgebildet.
Die Seitenflächen 4 sind derart gegliedert, dass die Hauptschneide 5 mit der Nebenschneide 6 einen flachen Winkel einschließt. Im vorliegenden Beispiel stehen die Hauptschneide 5 und die Nebenschneide 6 in einem Außenwinkel von etwa 193° zueinander.
Über Hilfslinien angedeutet ist die maximale Spantiefe a_{p max} der Hauptschneide 5. Wegen des flachen Winkels zwischen der Hauptschneide 5 und der Nebenschneide 6 können nur geringe maximale Spantiefen a_{p max} erzielt werden.

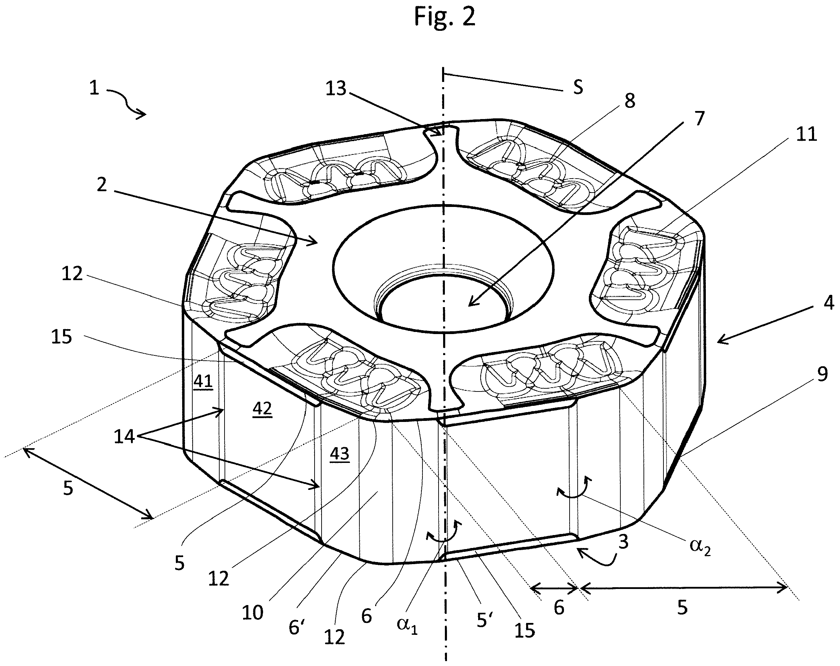

Figur 2 zeigt eine Schälplatte 1 in einem Ausführungsbeispiel der Erfindung in einer perspektivischen Ansicht. Die Schälplatte 1 weist in einer Draufsicht auf die Oberseite 2 die Gestalt eines im Wesentlichen regelmäßigen Sechsecks auf. Es liegt eine zu einer Symmetriesachse S sechszählige Symmetrie vor. Im Folgenden für eine Schälplatte 1 mit sechseckiger Grundform diskutiert, gelten analoge Verhältnisse für eine Schälplatte 1 mit fünfeckiger Grundform.

Die Schälplatte 1 weist eine Oberseite 2, eine Unterseite 3 sowie sich zwischen der Oberseite 2 und der Unterseite 3 erstreckende Seitenflächen 4 auf. Am Umfang der Schälplatte 1 sind die Seitenflächen 4 von Seitenkanten 10 beabstandet. Die Seitenkanten 10 sind vorzugsweise nicht als scharfe Kanten ausgebildet, sondern weisen einen Krümmungsradius von beispielsweise 5 mm auf.

Die Seitenflächen 4 verlaufen bevorzugt parallel zur Symmetriesachse S. Dies bewirkt eine einfache Herstellbarkeit über ein pulvermetallurgisches Herstellungsverfahren, da zum Pressen einer Pulvermischung eine einfache Matrize verwendet werden kann. Das Material der Schälplatte 1 ist vorzugsweise ein Hartmetall oder ein anderer auf pulvermetallurgischem Weg herstellbarer Werkstoff.

Konzentrisch parallel zur Symmetrieachse S ist eine die Schälplatte 1 durchdringende Bohrung 7 vorgesehen, über welche die Schälplatte 1 an einem Werkzeughalter (nicht gezeigt) mittels einer Spannschraube befestigbar ist. Durch einen formschlüssigen Plattensitz kann sich die Schälplatte 1 im Einsatz nicht mehr verdrehen und es besteht keine Gefahr, dass sich im Einsatz die Spannschraube lockert. Ein Verlust der Schälplatte 1 ist somit ausgeschlossen.

An dem Übergang der Oberseite 2 zu den Seitenflächen 4 ist eine erste Schneidkante 8 ausgebildet.
Im vorliegenden Ausführungsbeispiel ist die Schälplatte 1 doppelseitig ausgeführt. Es ist daher am Übergang der Unterseite 3 zu den Seitenflächen 4 eine zweite Schneidkante 9 ausgebildet. Doppelseitig bedeutet, dass sowohl die zwischen Oberseite 2 und Seitenflächen 4 als auch die zwischen Unterseite 3 und den Seitenflächen 4 Schneidkanten 8, 9 zur Zerspanung eingesetzt werden können. Demgemäß wirkt bei Verwendung von Abschnitten der Schneidkante 8 die Oberseite 2 als Spanfläche; bei gewendeter Schälplatte 1, d.h. bei Verwendung von Abschnitten der Schneidkante 9 zum Materialabtrag, wirkt die Unterseite 3 als Spanfläche. Eine Spanfläche ist jene Fläche einer Schneide, auf welcher ein von einer Schneidkante gebildeter Span abläuft.

Dadurch ergibt sich gegenüber einer einseitigen Ausführung, bei welcher nur zwischen Oberseite 2 und Seitenfläche 4 eine Schneidkante 8 ausgebildet ist, eine wesentlich bessere Materialausnutzung des Schneideinsatzes. Bevorzugt ist an den Schneidkanten 8, 9 zu den Seitenfläche 4 zumindest abschnittsweise wenigstens eine Stützfase 15 ausgebildet. Eine Stützfase 15 bewirkt stabile Schneidleistung und verringert Vibrationen sowie die Gefahr von Ausbrüchen an Schneidkanten.

Die Schneidkante 8 ist in Schneidkantenabschnitte in Form von Hauptschneiden 5 und Nebenschneiden 6 unterteilt. Es sind sechs der Oberseite 2 zugeordnete Hauptschneiden 5 und sechs Nebenschneiden 6 ausgebildet. Es könnten natürlich auch weniger als sechs Hauptschneiden 5 und Nebenschneiden 6 realisiert sein.
Die Seitenkanten 10 bilden am Schnittpunkt mit der Oberseite 2 Schneidecken 12.
Jede Hauptschneide 5 bildet mit der über eine Schneidecke 12 verbundenen Nebenschneide 6 ein Paar an Schneiden, welche sich im Einsatz der Schälplatte 1 gleichzeitig im Eingriff mit einem zu zerspanenden Material (hier nicht gezeigt) befinden.
Im Einsatz der Schälplatte 1 wird diese gegenüber einem zu bearbeitenden Werkstück so positioniert, dass eine aktive Hauptschneide 5 und die gegen den Uhrzeigersinn benachbarte und über eine aktive Schneidecke 12 damit verbundene aktive Nebenschneide 6 mit einem Werkstück im Eingriff sind.
Für Anwendungen mit Rechtsdrehung der Schälplatte 1 gegenüber dem Werkstück ist die Anordnung entsprechend spiegelverkehrt.
Die aktive Nebenschneide 6 ist dabei im Wesentlichen parallel zu einer Längsachse des Werkstücks.
Der Begriff "aktive Schneidecke" bezeichnet den Übergang zwischen einer Hauptschneide 5 und einer Nebenschneide 6, welche für den gleichzeitigen Einsatz bestimmt sind, d.h. welche bei Verwendung des Schneideinsatzes gleichzeitig zur Materialbearbeitung verwendet werden. Dementsprechend werden Abschnitte der Schneidkanten in "aktive" und "passive" Schneiden unterschieden, je nachdem, ob sie im Betrieb des Schneideinsatzes zur Materialbearbeitung genutzt werden oder nicht. Die Angabe der Orientierung "im Uhrzeigersinn" bezieht sich auf eine Blickrichtung in Draufsicht auf die Oberseite 2.
Bei der vorliegenden Schälplatte 1 sind also im Einsatz nicht die an ein und derselben Seitenfläche 4 ausgebildeten Hauptschneiden 5 und Nebenschneiden 6 im Eingriff mit dem Werkstück, sondern es bilden eine aktive Hauptschneide 5 mit einer an einer benachbarten Seitenfläche 4 ausgebildeten aktiven Nebenschneide 6 das Paar an gleichzeitig im Eingriff befindlichen Schneiden. Die aktiven Schneiden sind also von einer Seitenkante 10 beabstandet.
Dies hat gegenüber aus dem Stand der Technik bekannten Schälplatten, bei welchen für den gleichzeitigen Einsatz vorgesehene Haupt- und Nebenschneide an ein und derselben Seitenfläche ausgebildet sind, den wesentlichen Vorteil, dass ein steilerer Winkel zwischen der aktiven Nebenschneide 6 und der aktiven Hauptschneide 5 verwirklicht werden kann. Dies wiederum erlaubt bei gegebenen Abmessungen der Schneiden eine größere maximale Schnitttiefe a_{p max}, da sich die maximale Schnitttiefe a_{p max} aus dem Produkt der verfügbaren Schneidkantenlänge mal sin(Einstellwinkel) ergibt.

Die Hauptschneide 5 führt dabei die grobe Zerspanungsoperation, das Schruppen, aus, während die in Vorschubrichtung nachfolgende Nebenschneide 6 das Schlichten, also das Glätten übernimmt.

Die jeweiligen Erstreckungen einer Hauptschneide 5 und einer Nebenschneide 6 sind über strichlierte Hilfslinien kenntlich gemacht. Die Nebenschneiden 6 sind dabei deutlich kürzer als die Hauptschneiden 5. Die Nebenschneiden 6 weisen beispielsweise 1/6 bis 1/2 der Länge der Hauptschneiden 5 auf.

An der Oberseite 2 sind Spanleitstufen 11 ausgebildet, über welche von Hauptschneiden 5 bzw. Nebenschneiden 6 gebildete Späne abführbar sind. In der Ausführung als doppelseitige Schälplatte 1 sind auch an der Unterseite 3 Spanleitstufen 11 in gleicher Weise ausgebildet.

Weiters erkennbar sind Auflageflächen 13, im Bereich welcher die Oberseite 2 zwischen den Spanleitstufen 11 sich auf dem gleichen Niveau wie um die Bohrung 7 bis an Rand der Schälplatte 1 erstreckt. Dies hat den Vorteil, dass bei einer Klemmung der Schälplatte 1 in einem Werkzeug eine Abstützung bis an den Umfang der Schälplatte 1 möglich ist.

Zur Schaffung eines Freiwinkels zwischen einer der gleichen Seitenfläche 4 zugeordneten Nebenschneide 6 und Hauptschneide 5 sind die Seitenflächen 4 in zueinander verkippte Teilflächen 41, 42 unterteilt. Die Teilflächen 41, 42 sind in einem Außenwinkel α₁ von beispielsweise 190° zueinander angestellt. Dieser Winkel bewirkt, dass eine, zu einer aktiven Nebenschneide 6 gegen den Uhrzeigersinn benachbarte, passive Hauptschneide 5 sich nicht im Materialeingriff befindet.

Für doppelseitig verwendbare Schälplatten 1 ist an den Seitenflächen 4 eine dritte Teilfläche 43 vorgesehen, welche gegenüber der weiteren Teilfläche 42 ebenfalls um einen Außenwinkel α₂ geneigt ist. Bevorzugt hat der Außenwinkel α₂ den gleichen Betrag wie der Außenwinkel α₁.
Dies ist dadurch erklärlich, da ja durch Wenden der Schälplatte 1 Abschnitte jener Teilflächen 42, 43, welche in der ungewendeten Lage der Schälplatte Freiflächen zu der Oberseite 2 zugeordneten Hauptschneide 5 bilden, im gewendeten Zustand als Freiflächen zu der Unterseite 3 zugeordneten Nebenschneide 6' wirken. Für den Einsatz in der gewendeten Lage bildet die dritte Teilfläche 43 mit der Unterseite 3 eine der Unterseite 3 zugeordnete Nebenschneide 6'.

Zwischen den Teilflächen 41 und der Oberseite 2 sind die der Oberseite 2 zugeordneten Nebenschneiden 6 ausgebildet. Die der Oberseite 2 zugeordneten Hauptschneiden 5 sind am Übergang der Teilflächen 42, 43 zur Oberseite 2 ausgebildet. Die Hauptschneiden 5 erstrecken sich jeweils angrenzend an die Nebenschneiden 6 bis zu den Schneidecken 12.

Das Ausführungsbeispiel der Figur 2 zeigt eine doppelseitig verwendbare Schälplatte 1. Es sind am Übergang der Seitenflächen 4 zur Unterseite 3 der Unterseite 3 zugeordnete Hauptschneiden 5' und Nebenschneiden 6' ausgebildet. Es können daher 12 Paare an Hauptschneiden 5, 5' und Nebenschneiden 6, 6' genutzt werden. Man spricht von einem 12-fach indexierbaren Schneideinsatz.

Bevorzugt ist vorgesehen, dass die Nebenschneiden 6, 6' eine Länge von 1/6 bis 1/2 der Länge der Hauptschneiden 5, 5' aufweisen. Dementsprechend stehen die lateralen Erstreckungen der Teilflächen 41, 42, 43 einem Verhältnis von z.B. 1/6 : 5/6 : 1/6 (für eine Länge der Nebenschneide von 1/6 der Hauptschneide). Die mit der Oberseite 2 eine Nebenschneide 6 bildende Teilfläche 41 ist also vorzugsweise gleich breit wie eine mit der Unterseite 3 eine der Unterseite 3 zugeordnete Nebenschneide 6' bildende Teilfläche 43.

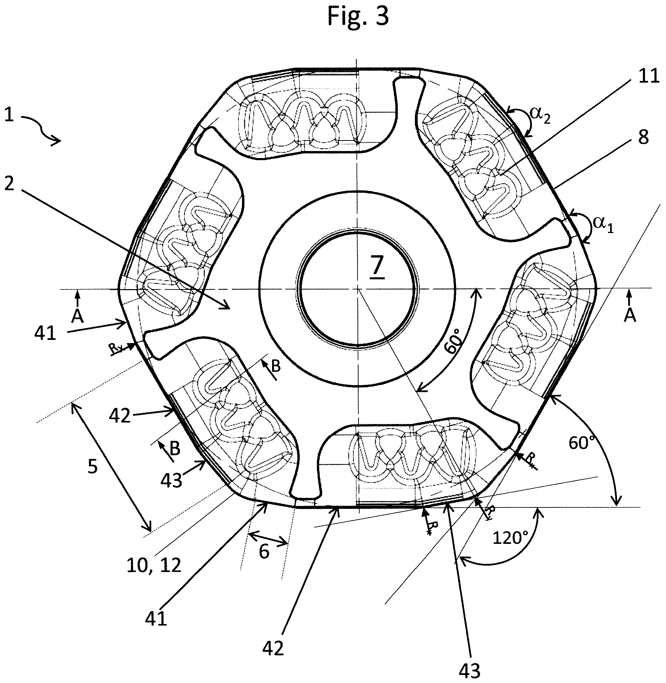

Dies wird deutlich in einem Grundriss der Schälplatte 1, wie in Figur 3 dargestellt.
Die Teilflächen 41, 42, 43 sind im Grundriss projizierend. Die Teilfläche 41 ist gegenüber der weiteren Teilfläche 42 um α₁ verkippt, die dritte Teilfläche 43 ist gegenüber der weiteren Teilfläche 42 um α₂ verkippt, wobei vorzugsweise gilt α₁ = α₂. Anders ausgedrückt, weisen die Teilflächen 41, 43 gegenüber der Teilfläche 42 den gleichen Winkel auf. Die Facettierung ergibt eine konvexe Gestalt der Seitenflächen 4.
Die zwischen der Teilfläche 42, der Teilfläche 43 und der Oberseite 2 gebildete Hauptschneide 5 zeigt in diesem Fall einer doppelseitig verwendbaren Schälplatte 1 in einer Draufsicht auf die Schälplatte 1 einen geknickten Verlauf.

Die weiteren Teilflächen 42 der Schälplatte stehen jeweils in einem Winkel von 60° (gemessen zwischen den Ebenen-Normalen der Teilflächen 42) zueinander. Die Schälplatte 1 weist eine sechs-zählige Symmetrie auf.

Die Teilflächenübergänge 14 zwischen den Teilflächen 41, 42, 43 an einer Seitenfläche 4 sind bevorzugt nicht als scharfe Kante ausgeführt, sondern weisen einen Krümmungsradius Rₓ von beispielsweise 5 mm auf.
Ebenfalls gerundet mit einem Krümmungsradius R_{y} ausgeführt sind die Seitenkanten 10, beispielsweise mit einem Krümmungsradius R_{y} von 5 mm.

Bei gewendeter Schälplatte 1 - d.h. die Unterseite 3 fungiert als Spanfläche - wirkt jener Abschnitt der Schneidkante 9, welcher sich zwischen der Unterseite 3 und der Teilfläche 43 erstreckt, als Nebenschneide 6'. Es bilden dann die Hauptschneide 5' und die Nebenschneide 6' ein Paar an aktiven Schneiden, welche über die Schneidecke 12 verbunden sind. Bei dieser vorteilhaften Ausführungsform einer doppelseitigen Schälplatte 1 können also je sechs Paare an Hauptschneiden 5, 5' und Nebenschneiden 6, 6' an der Oberseite 2 bzw. Unterseite 3 genutzt werden.

Ist die Schälplatte 1 - abweichend von dem hier gezeigten Ausführungsbeispiel - einseitig ausgeführt, ist eine Gliederung der Seitenflächen 4 in drei Teilflächen nicht erforderlich. In diesem Fall genügt eine Gliederung in zwei Teilflächen 41 und 42 solchermaßen, dass eine aktive Nebenschneide 6 gegenüber einer anschließenden passiven Hauptschneide 5 einen Winkel aufweist. Betrachtet man eine Seitenfläche 4, kann sich bei einer einseitigen Ausführung der Schälplatte 1 die Teilfläche 42 bis zur Seitenkante 10 erstrecken. Die zwischen der Teilfläche 42 und der Oberseite 2 gebildete Hauptschneide 5 zeigt in diesem Fall in einer Draufsicht auf die Schälplatte 1 einen geraden Verlauf.

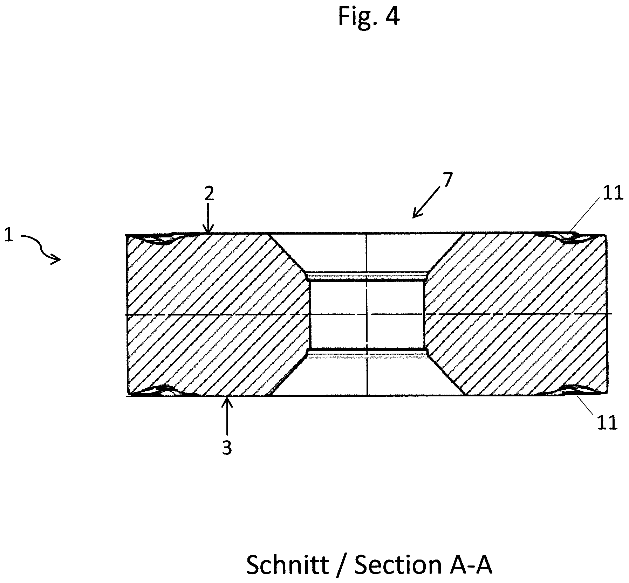

Figur 4 zeigt eine erfindungsgemäße Schälplatte 1 im Querschnitt entlang der in Figur 3 eingezeichneten Schnittebene A-A. Zu erkennen sind die Spanleitstufen 11 an der Oberseite 2 sowie der Unterseite 3 der Schälplatte 1.

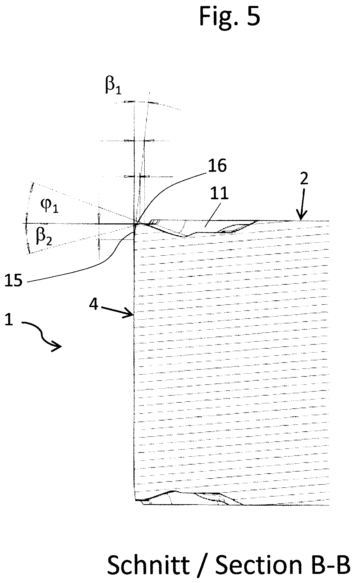

Figur 5 zeigt einen Schnitt der Schälplatte 1 entlang der in Figur 3 eingezeichneten Schnittebene B-B.
Durch die Lage des Schnittes sind Details einer Stützfase 15 bzw. einer Schutzfase 16 im Bereich der Hautschneide 5 zu erkennen. Es besteht eine Stützfase 15 an der Außenfläche 4 mit einem Fasenwinkel β₁ von beispielsweise 3 bis 7°. Eine Schutzfase 16 ist spanflächenseitig an der Oberseite 2 mit einem Fasenwinkel β₂ von beispielsweise 5 bis 20° ausgebildet. Auf einen ebenen Abschnitt folgend tritt die die als Vertiefung in der Oberseite 2 ausgebildete Spanleitstufe 11 mit einem Spanwinkel ϕ₁ von beispielsweise 5 bis 30° zur Horizontalen ein.

Die Winkelbereiche sind exemplarisch genannt und sind nicht einschränkend zu verstehen.

Die variable Anbringung von Stützfasen 15 bzw. Schutzfasen 16 in unterschiedlichen Abschnitten der Schneidkante ist ein besonderer Vorteil der erfindungsgemäßen Schälplatten 1 gegenüber runden Schälplatten. So kann beispielsweise in einem Bereich einer Hauptschneide 5 ein unterschiedlicher Fasenwinkel der Stützfase 15 bzw. der Schutzfase 16 realisiert werden als in einem Bereich einer Nebenschneide 6.

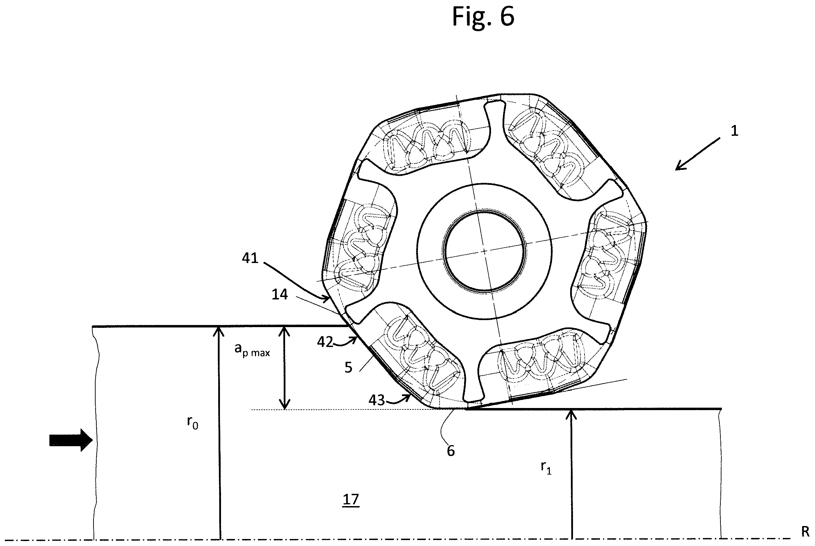

Figur 6 zeigt eine erfindungsgemäße Schälplatte 1 im Eingriff mit einem zylindersymmetrischen Werkstück 17.
Ein die Schälplatte 1 tragendes Werkzeug (nicht gezeigt) rotiert um eine Rotationsachse R. Die Drehrichtung weist senkrecht aus der Zeichnungsebene zum Betrachter. Eine Vorschubrichtung des Werkstückes 17 ist durch einen Blockpfeil angedeutet. Freilich kommt es bei der Bearbeitung auf die Relativbewegung von Werkzeug und Werkstück 17 an. So könnte auch eine Drehung des Werkstückes 17 und ein Vorschub des Werkzeuges realisiert sein. Das Werkstück 17 weist einen Ausgangsradius ro und einen Radius r₁ nach der Bearbeitung auf.
Die Nebenschneide 6 ist im Wesentlichen parallel zur Rotationsachse R angestellt. Anders ausgedrückt, ist der Flugkreis der Nebenschneide 6 im Wesentlichen ein Zylindermantel, während die Hauptschneide 5 einen Flugkreis in Form zweier gestufter Kegelstümpfe aufweist.
Die aktive Hauptschneide 5 kann bis zu dem die Teilfläche 41 zur Teilfläche 42 begrenzenden Teilflächenübergang 14 zugestellt werden. Daraus resultiert eine maximale Spantiefe a_{p max}. Bei einem Eintauchen der Schälplatte 1 über den die Teilfläche 41 zur Teilfläche 42 begrenzenden Teilflächenübergang 14 hinaus würde die daran anschließende (hier passive) Nebenschneide 6 abgenutzt werden.
Besonders vorteilhaft gegenüber aus dem Stand der Technik bekannten runden Schälplatten ist es, dass bei angenommen gleicher maximaler Spantiefe a_{p max} die Berührungslänge der Schneidkante, d.h. die Länge der tatsächlich im Eingriff mit dem Werkstück stehenden Schneidkante bei von

Geradenabschnitten gebildeten Schneiden kürzer ist als bei bogenförmigen Schneiden. Eine kürzere Berührungslänge resultiert in geringeren Schnittkräften.

Weiters vorteilhaft gegenüber runden Schälplatten ist es, dass der Anstellwinkel der Hauptschneide 5 der vorliegenden Schälplatte 1 über die Länge der Hauptschneide 5 im Wesentlichen konstant ist. Bei runden Schälplatten hingegen ist der Anstellwinkel der Schneide im Bereich des minimalen Abstandes der Schneide zur Rotationsachse R annähernd Null und steigt mit zunehmendem radialen Abstand von der Rotationsachse R. Je nach gewählter Schnitttiefe kann bei runden Schälplatten im Bereich des Austritts der Schneide aus dem Werkstück ein Anstellwinkel von rund 90° auftreten. Ein über die Schneidenlänge veränderlicher Anstellwinkel bedeutet ungleichmäßige Schnittkräfte entlang der Schneidenlänge.
Ein weiterer Nachteil bogenförmiger Hauptschneiden - wie bei runden Schälplatten der Fall - sind wellige Werkstückoberflächen. Daher wird bei runden Schälplatten für die Glättung der Oberflächen eine zusätzliche Schlichtplatte benötigt. Bei einer erfindungsgemäßen Schälplatte hingegen wird nicht unbedingt eine zusätzliche Schlichtplatte benötigt.

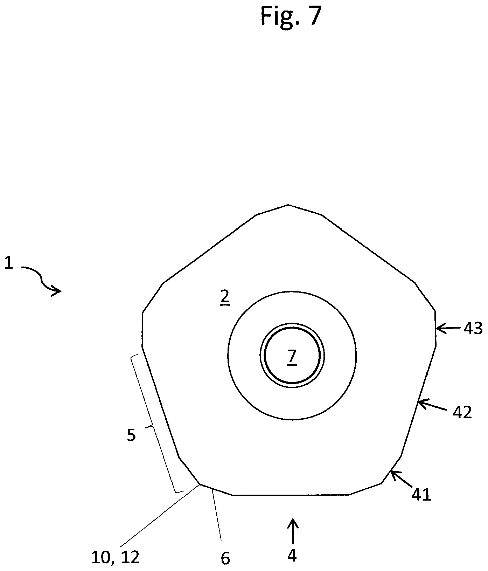

Figur 7 zeigt eine Schälplatte 1 in einem weiteren Ausführungsbeispiel mit Gestalt eines im Wesentlichen regelmäßigen Fünfecks in einer Draufsicht auf die Oberseite 2. Die fünfeckige Schälplatte 1 hat fünf Seitenflächen 4, an deren Übergang zur Oberseite 2 Schneidkanten ausgebildet sind.
Die fünfeckige Schälplatte 1 weist im vorliegenden Ausführungsbeispiel fünf Paare von Hauptschneiden 5 und Nebenschneiden 6 auf, wobei der Übersichtlichkeit halber die Gegebenheiten nur für ein Paar einer Hauptschneide 5 und einer Nebenschneide 6 illustriert sind.
Eine aktive Hauptschneide 5 ist über eine Schneidecke 12 von der aktiven Nebenschneide 6 beabstandet. Der maximale Außenwinkel der Teilflächen (Facetten) 41, 42, 43 beträgt 216°, bevorzugt beträgt der Außenwinkel 190°.

In einer doppelseitig verwendbaren Variante sind auch am Übergang der Seitenflächen 4 zur Unterseite 3 Schneidkanten ausgebildet. Sind an Oberseite 2 und Unterseite 3 jeweils fünf Paare an Hauptschneiden 5 und Nebenschneiden 6 ausgebildet, ist die fünfeckige Schälplatte 1 10-fach indexierbar.

Bezüglich Möglichkeiten der Ausgestaltung (Radien, Stützfasen, Schutzfasen etc.) sei auf die Ausführungen zum sechseckigen Ausführungsbeispiel verwiesen.

Eine fünfeckige Schälplatte 1 weist gegenüber einer sechseckigen Schälplatte 1 eine geringere Anzahl an unabhängigen Schneiden auf, jedoch kann bei gleichen Außenabmessungen eine größere maximale Schnitttiefe a_{p max} erzielt werden.
In der Praxis ist eine größere Anzahl an nutzbaren Schneiden interessanter als die maximale Schnitttiefe, weswegen sechseckigen Platten in der Regel der Vorzug gegeben wird.

### Liste der verwendeten Bezugszeichen:

- 1: Schälplatte
- 2: Oberseite
- 3: Unterseite
- 4: Seitenfläche
- 41, 42, 43: Teilflächen
- 5: Hauptschneide
- 6: Nebenschneide
- 7: Bohrung
- 8, 9: Schneidkante
- 10: Seitenkante
- 11: Spanleitstufe
- 12: Schneidecke
- 13: Auflagefläche
- 14: Teilflächenübergang
- 15: Stützfase
- 16: Schutzfase
- 17: Werkstück
- S: Symmetrieachse
- R: Rotationsachse
- a_{p max}: maximale Schnitttiefe
- r₀: Ausgangsradius
- r₁: Radius nach Bearbeitung

## Patentansprüche

1. Schälplatte (1) mit
- einer Oberseite (2) und einer Unterseite (3),
- sich zwischen der Oberseite (2) und der Unterseite (3) erstreckenden Seitenflächen (4),
- am Übergang der Seitenflächen (4) zur Oberseite (2) ausgebildeten Hauptschneiden (5) und Nebenschneiden (6),
wobei die Schälplatte (1) in einer Draufsicht auf die Oberseite (2) die Gestalt eines im Wesentlichen regelmäßigen n-Ecks n-zähliger Symmetrie um eine Symmetrieachse (S), und n zwischen den n Seitenflächen (4) liegende Seitenkanten (10) aufweist, wobei am Übergang wenigstens einer Seitenfläche (4) zur Oberfläche (2) eine Hauptschneide (5) und eine Nebenschneide (6) ausgebildet ist, **dadurch gekennzeichnet, dass** n fünf oder sechs ist, und dass aktive Hauptschneiden (5) und aktive Nebenschneiden (6) durch eine Seitenkante (10) beabstandet sind, welche Seitenkante (10) am Übergang zur Oberseite (2) eine aktive Schneidecke (12) zur jeweiligen aktiven Hauptschneide (5) und aktiven Nebenschneide (6) bildet, wobei an wenigstens einer Seitenfläche (4) wenigstens eine erste Teilfläche (41) ausgebildet ist, welche mit der Oberseite (2) eine Nebenschneide (6) bildet, und an der wenigstens einen Seitenfläche (4) wenigstens eine weitere Teilfläche (42) ausgebildet ist, welche mit der Oberseite (2) zumindest einen Teil einer Hauptschneide (5) bildet und wobei die erste Teilfläche (41) mit der weiteren Teilfläche (42) einen Außenwinkel (α1) von größer 180° und kleiner 220° einschließt, und wobei an wenigstens einer Seitenfläche (4) eine gegenüber der weiteren Teilfläche (42) in einem Winkel (α2) verkippte dritte Teilfläche (43) ausgebildet ist, wobei die weitere Teilfläche (42) und die dritte Teilfläche (43) mit der Oberseite (2) die Hauptschneide (5) bilden.

2. Schälplatte (1) nach Anspruch 1, wobei n ist gleich sechs.

3. Schälplatte (1) nach Anspruch 1 oder 2, wobei am Übergang einer jeden Seitenfläche (4) zur Oberfläche (2) jeweils eine Hauptschneide (5) und eine Nebenschneide (6) ausgebildet ist.

4. Schälplatte (1) nach wenigstens einem der vorangegangenen Ansprüche, wobei die Nebenschneiden (6) eine Länge von 1/6 bis 1/2 der Länge der Hauptschneiden (5) aufweisen.

5. Schälplatte (1) nach wenigstens einem der vorangegangenen Ansprüche, wobei die Hauptschneiden (5) und / oder die Nebenschneiden (6) als Geradenabschnitte ausgebildet sind.

6. Schälplatte (1) nach wenigstens einem der vorangegangenen Ansprüche, wobei die erste Teilfläche (41) mit der weiteren Teilfläche (42) einen Außenwinkel (α1) von 190° einschließt.

7. Schälplatte (1) nach wenigstens einem der vorangegangenen Ansprüche 6, wobei an der Schälplatte (1) eine Vielzahl an Teilflächen (41, 42) ausgebildet ist, vorzugsweise an jeder Seitenfläche (4) Teilflächen (41, 42) ausgebildet sind.

8. Schälplatte (1) nach wenigstens einem der vorangegangenen Ansprüche, wobei jene mit der Oberseite (2) zumindest einen Teil einer Hauptschneide (5) bildenden Teilflächen (42), welche durch eine Schneidecke (12) voneinander beabstandet sind, jeweils in einem Winkel von 60° zueinander angeordnet sind, gemessen als Innenwinkel zwischen Ebenennormalen.

9. Schälplatte (1) nach wenigstens einem der vorangegangenen Ansprüche, wobei die Schälplatte (1) doppelseitig ausgebildet ist.

10. Schälplatte (1) nach Anspruch 9, wobei am Übergang wenigstens einer Seitenfläche (4) zur Unterseite (3) eine der Unterseite (3) zuordenbare Hauptschneide (5') und eine der Unterseite (3) zuordenbare Nebenschneide (6') ausgebildet ist.

11. Schälplatte (1) nach Anspruch 9 oder 10, wobei eine der Unterseite (3) zuordenbare Hauptschneide (5') am Übergang der Teilflächen (41, 42) mit der Unterseite (3) und eine der Unterseite (3) zuordenbare Nebenschneide (6') am Übergang der dritten Teilfläche (43) der Seitenfläche (4) mit der Unterseite (3) ausgebildet ist.

12. Schälplatte (1) nach wenigstens einem der Ansprüche 9 bis 11, wobei die Schälplatte (1) n der Unterseite (3) zuordenbare Hauptschneiden (5') und n der Unterseite (3) zuordenbare Nebenschneiden (6') aufweist, mit n ist gleich fünf oder sechs.

13. Schälplatte (1) nach wenigstens einem der Ansprüche 9 bis 12, wobei die Schälplatte (1) n der Oberseite (2) zuordenbare Hauptschneiden (5) und genau n der Oberseite (2) zuordenbare Nebenschneiden (6) sowie n der Unterseite (3) zuordenbare Hauptschneiden (5') und n der Unterseite (3) zuordenbare Nebenschneiden (6') aufweist, mit n ist gleich fünf oder sechs.

14. Schälplatte (1) nach wenigstens einem der vorangegangenen Ansprüche, wobei an der Oberseite (2) und / oder der Unterseite (3) eine Spanleitstufe (11) ausgebildet ist.

15. Schälplatte (1) nach wenigstens einem der vorangegangenen Ansprüche, wobei der Übergang der Teilflächen (41, 42, 43) an einer Seitenfläche (4) gerundet mit einem Krümmungsradius zwischen 1 und 20 mm, vorzugsweise mit einem Krümmungsradius (Rₓ) von vorzugsweise 5 mm ausgebildet ist.

16. Schälplatte (1) nach wenigstens einem der vorangegangenen Ansprüche, wobei eine Hauptschneide (5, 5') als Rundschneide mit einem Krümmungsradius von größer 50 mm ausgebildet ist.

17. Schälplatte (1) nach wenigstens einem der vorangegangenen Ansprüche, wobei eine Nebenschneide (6) einen Krümmungsradius von größer 50 mm aufweist, vorzugsweise als gerade Schneide ausgebildet ist.

18. Anordnung wenigstens einer Schälplatte (1) nach wenigstens einem der vorangegangenen Ansprüche mit einem Werkzeughalter.

## Claims

1. A peeling plate (1) having
- an upper side (2) and a lower side (3),
- lateral faces (4) that extend between the upper side (2) and the lower side (3),
- primary cutting edges (5) and secondary cutting edges (6) that are configured at the transition from the lateral faces (4) to the upper side (2),
wherein the peeling plate (1) in a plan view of the upper side (2) has the shape of a substantially regular *n*-gon of n-fold symmetry with respect to a symmetry axis (S), and *n* lateral edges (10) lying between the *n* lateral faces (4), wherein a primary cutting edge (5) and a secondary cutting edge (6) are configured at the transition from at least one lateral face (4) to the surface (2), **characterized in that** n is five or six,
and **in that** active primary cutting edges (5) and active secondary cutting edges (6) are spaced apart from a lateral edge (10), said lateral edge (10) at the transition to the upper side (2) forming an active cutting corner (12) to the respective active primary cutting edge (5) and active secondary cutting edge (6),
wherein at least one first part-face (41) which conjointly with the upper side (2) forms a secondary cutting edge (6) is configured on at least one lateral face (4), and at least one further part-face (42) which conjointly with the upper side (2) forms at least part of a primary cutting edge (5) is configured on the at least one lateral face (4),
and wherein the first part-face (41) conjointly with the further part-face (42) encloses an external angle (α1) of greater than 180° and smaller than 220°, and
wherein a third part-face (43) is configured on at least one lateral face (4), which third part-face (43) in relation to the further part-face (42) is inclined by an angle (α2), wherein the further part-face (42) and the third part-face (43) conjointly with the upper side (2) form the primary cutting edge (5).

2. The peeling plate (1) as claimed in claim 1, wherein *n* equals six.

3. The peeling plate (1) as claimed in claim 1 or 2, wherein at the transition of each lateral face (4) to the surface (2), each a primary cutting edge (5) and a secondary cutting edge (6) is configured .

4. The peeling plate (1) as claimed in at least one of the preceding claims, wherein the secondary cutting edges (6) have a length of 1/6 to 1/2 of the length of the primary cutting edges (5).

5. The peeling plate (1) as claimed in at least one of the preceding claims, wherein the primary cutting edges (5) and/or the secondary cutting edges (6) are configured as linear portions.

6. The peeling plate (1) as claimed in at least one of the preceding claims, wherein the first part-face (41) with the further part-face (42) encloses an external angle (α1) of 190°.

7. The peeling plate (1) as claimed in at least one of the preceding claims, wherein a multiplicity of part-faces (41, 42) are configured on the peeling plate (1), part-faces (41, 42) preferably being configured on each lateral face (4).

8. The peeling plate (1) as claimed in at least one of the preceding claims, wherein those part-faces (42) that conjointly with the upper side (2) form at least part of a primary cutting edge (5) and that are mutually spaced apart from a cutting corner (12) are each disposed at a mutual angle of 60°, said angle being measured as an internal angle between plane normals.

9. The peeling plate (1) as claimed in at least one of the preceding claims, wherein the peeling plate (1) is configured so as to be double-sided.

10. The peeling plate (1) as claimed in claim 9, wherein a primary cutting edge (5') that is assignable to the lower side (3) and a secondary cutting edge (6') that is assignable to the lower side (3) are configured at the transition from at least one lateral face (4) to the lower side (3).

11. The peeling plate (1) as claimed in claim 9 or 10, wherein a primary cutting edge (5') that is assignable to the lower side (3) is configured at the transition from the part-faces (41, 42) to the lower side (3), and a secondary cutting edge (6') that is assignable to the lower side (3) is configured at the transition from the third part-face (43) of the lateral face (4) to the lower side (3).

12. The peeling plate (1) as claimed in at least one of claims 9 to 11, wherein the peeling plate (1) has *n* primary cutting edges (5') that are assignable to the lower side (3) and *n* secondary cutting edges (6') that are assignable to the lower side (3), where *n* equals five or six.

13. The peeling plate (1) as claimed in at least one of claims 9 to 12, wherein the peeling plate (1) has *n* primary cutting edges (5) that are assignable to the upper side (2), and exactly *n* secondary cutting edges (6) that are assignable to the upper side (2), and *n* primary cutting edges (5') that are assignable to the lower side (3), and *n* secondary cutting edges (6') that are assignable to the lower side (3), where *n* equals five or six.

14. The peeling plate (1) as claimed in at least one of the preceding claims, wherein a chip geometry (11) is configured on the upper side (2) and/or the lower side (3).

15. The peeling plate (1) as claimed in at least one of the preceding claims, wherein the transition of the part-faces (41, 42, 43) on a lateral face (4) is configured so as to be rounded, having a curvature radius between 1 and 20 mm, preferably having a curvature radius (Rₓ) of preferably 5 mm.

16. The peeling plate (1) as claimed in at least one of the preceding claims, wherein a primary cutting edge (5, 5') is configured as a round cutting edge having a curvature radius of greater than 50 mm.

17. The peeling plate (1) as claimed in at least one of the preceding claims, wherein a secondary cutting edge (6) has a curvature radius of greater than 50 mm, preferably being configured as a linear cutting edge.

18. An assembly of at least one peeling plate (1) as claimed in at least one of the preceding claims, having a tool holder.

## Revendications

1. Plaque d'épluchage (1) comprenant
- un côté supérieur (2) et un côté inférieur (3),
- des surfaces latérales (4) s'étendant entre le côté supérieur (2) et le côté inférieur (3),
- des arêtes de coupe principales (5) et des arêtes de coupe secondaires (6) formées à la transition des surfaces latérales (4) vers le côté supérieur (2),
la plaque d'épluchage (1) ayant dans une vue de dessus du côté supérieur (2) la forme d'un polygone sensiblement régulier à n côtés présentant n symétries autour d'un axe de symétrie (S), et n bords latéraux (10) situés entre les n surfaces latérales (4), une arête de coupe principale (5) et une arête de coupe secondaire (6) étant formées à la transition d'au moins une surface latérale (4) vers la surface (2), **caractérisée en ce que** n vaut cinq ou six, et **en ce que** des arêtes de coupe principales actives (5) et des arêtes de coupe secondaires actives (6) sont espacées par un bord latéral (10), lequel bord latéral (10) forme à la transition vers le côté supérieur (2) un coin de coupe actif (12) par rapport à l'arête de coupe principale active (5) et l'arête de coupe secondaire active (6) respectives, au moins une première surface partielle (41) étant formée au niveau d'au moins une surface latérale (4) et formant une arête de coupe secondaire (6) avec le côté supérieur (2), et au moins une autre surface partielle (42) étant formée au niveau de l'au moins une surface latérale (4) et formant au moins une partie d'une arête de coupe principale (5) avec le côté supérieur (2) et la première surface partielle (41) formant avec l'autre surface partielle (42) un angle extérieur (α1) de plus de 180° et de moins de 220°, et une troisième surface partielle (43), inclinée d'un angle (α2) par rapport à l'autre surface partielle (42), étant formée au niveau d'au moins une surface latérale (4), l'autre surface partielle (42) et la troisième surface partielle (43) formant l'arête principale (5) avec le côté supérieur (2).

2. Plaque d'épluchage (1) selon la revendication 1, n étant égal à six.

3. Plaque d'épluchage (1) selon la revendication 1 ou 2, une arête de coupe principale (5) et une arête de coupe secondaire (6) étant formées à la transition de chaque surface latérale (4) vers la surface (2).

4. Plaque d'épluchage (1) selon l'une au moins des revendications précédentes, les arêtes secondaires (6) ayant une longueur représentant 1/6 à 1/2 de la longueur des arêtes principales (5).

5. Plaque d'épluchage (1) selon l'une au moins des revendications précédentes, les arêtes de coupe principales (5) et/ou les arêtes de coupe secondaires (6) étant conçues comme des portions droites.

6. Plaque d'épluchage (1) selon l'une au moins des revendications précédentes, la première surface partielle (41) formant avec l'autre surface partielle (42) un angle extérieur (α1) de 190°.

7. Plaque d'épluchage (1) selon l'une au moins des revendications précédentes, une pluralité de surfaces partielles (41, 42) étant formée au niveau de la plaque d'épluchage (1), de préférence des surfaces partielles (41, 42) étant formées au niveau de chaque surface latérale (4).

8. Plaque d'épluchage (1) selon l'une au moins des revendications précédentes, les surfaces partielles (42) qui forment avec le côté supérieur (2) au moins une partie d'une arête de coupe principale (5) et qui sont espacées les unes des autres par un coin de coupe (12), étant disposées les unes par rapport aux autres avec un angle de 60°, mesuré comme l'angle interne entre les normales au plan.

9. Plaque d'épluchage (1) selon l'une au moins des revendications précédentes, la plaque d'épluchage (1) étant à double face.

10. Plaque d'épluchage (1) selon la revendication 9, une arête de coupe principale (5') qui peut être associée au côté inférieur (3) et une arête de coupe secondaire (6') qui peut être associée au côté supérieur (3) étant formées à la transition d'au moins une surface latérale (4) vers le côté inférieur (3).

11. Plaque d'épluchage (1) selon la revendication 9 ou 10, une arête de coupe principale (5') qui peut être associée au côté inférieur (3) étant formée à la transition des surfaces partielles (41, 42) avec le côté inférieur (3) et une arête de coupe secondaire (6') qui peut être associée au côté supérieur (3) étant formée à la transition de la troisième surface partielle (43) de la surface latérale (4) avec le côté inférieur (3).

12. Plaque d'épluchage (1) selon l'une au moins des revendications 9 à 11, la plaque d'épluchage (1) comportant n arêtes de coupe principales (5') pouvant être associées au côté inférieur (3) et n arêtes de coupe secondaires (6') pouvant être associées au côté inférieur (3), n étant égal à cinq ou six.

13. Plaque d'épluchage (1) selon l'une au moins des revendications 9 à 12, la plaque d'épluchage (1) comportant n arêtes de coupe principales (5) pouvant être associées au côté supérieur (2) et exactement n arêtes de coupe secondaires (6) pouvant être associées au côté supérieur (2) et n arêtes de coupe principales (5') pouvant être associées au côté supérieur (3) et n arêtes de coupe secondaires (6') pouvant être associées au côté supérieur (3), n étant égal à cinq ou six.

14. Plaque d'épluchage (1) selon l'une au moins des revendications précédentes, un brise-copeaux (11) étant formé au niveau du côté supérieur (2) et/ou du côté inférieur (3).

15. Plaque d'épluchage (1) selon l'une au moins des revendications précédentes, la transition des surfaces partielles (41, 42, 43) au niveau d'une surface latérale (4) étant arrondie avec un rayon de courbure compris entre 1 et 20 mm, de préférence avec un rayon de courbure (Rₓ) de préférence de 5 mm.

16. Plaque d'épluchage (1) selon l'une au moins des revendications précédentes, une arête de coupe principale (5, 5') étant conçue comme une arête de coupe circulaire ayant un rayon de courbure supérieur à 50 mm.

17. Plaque d'épluchage (1) selon l'une au moins des revendications précédentes, une arête de coupe secondaire (6) ayant un rayon de courbure supérieur à 50 mm, de préférence étant conçue comme une arête de coupe droite.

18. Ensemble d'au moins une plaque d'épluchage (1) selon l'une au moins des revendications précédentes, comprenant un porte-outil.
